# EUROPEAN PATENT SPECIFICATION

(11) **EP 4 029 597 B1**
(45) Date of publication and mention of the grant of the patent: **12.03.2025**
(21) Application number: 20862200.1
(22) Date of filing: 10.09.2020
(51) Int. Cl.: C08F 14/06, B01J 19/18, C08F 2/01

(54) **USE OF AN AGITATOR FOR BATCH SUSPENSION POLYMERIZATION OF VINYL CHLORIDE RESIN AND METHOD AND REACTOR FOR BATCH SUSPENSION POLYMERIZATION OF VINYL CHLORIDE RESIN**
VERWENDUNG EINES RÜHRERS ZUR CHARGENWEISEN SUSPENSIONSPOLYMERISATION VON VINYLCHLORIDHARZ SOWIE VERFAHREN UND REAKTOR ZUR CHARGENWEISEN SUSPENSIONSPOLYMERISATION VON VINYLCHLORIDHARZ
UTILISATION D'UN AGITATEUR POUR LA POLYMÉRISATION EN SUSPENSION DE TYPE DISCONTINU DE RÉSINE DE CHLORURE DE VINYLE ET PROCÉDÉ ET RÉACTEUR POUR LA POLYMÉRISATION EN SUSPENSION DE TYPE DISCONTINU DE RÉSINE DE CHLORURE DE VINYLE

(30) Priority: 10.09.2019 KR 20190112289; 09.09.2020 KR 20200115185
(43) Date of publication of application: 20.07.2022
(73) Proprietor: Hanwha Solutions Corporation, Jung-gu Seoul 04541 (KR)
(72) Inventor: LEE, Hye Won, Daejeon 34128 (KR); LEE, Shin Beom, Daejeon 34128 (KR); PARK, Sung Eun, Daejeon 34128 (KR); AHAN, Wooyoul, Daejeon 34128 (KR); JIN, Seon Jeong, Daejeon 34128 (KR); HAN, Kee Do, Daejeon 34128 (KR)
(74) Representative: Kraus & Lederer PartGmbB
(86) International application number: PCT/KR2020/012209
(87) International publication number: WO 2021/049883

(56) References cited:
- EP-A1- 2 007 822
- EP-B1- 2 007 822
- WO-A1-2014/094793
- WO-A1-2018/038460
- WO-A1-2019/003209
- JP-A- 2007 260 646
- KR-A- 20160 000 596
- KR-A- 20160 004 074
- KR-A- 20160 004 074
- KR-A- 20160 111 664
- KR-A- 930 002 381
- US-A- 6 082 890

## Description

### Technical Field

The present invention relates to a batch suspension polymerization reactor for preparing a vinyl chloride resin, a batch suspension polymerization method using the same and to the use of an agitator for batch suspension polymerization for preparing a vinyl chloride resin in a batch suspension polymerization reactor.

Particularly, the present invention relates to a batch reactor for performing a vinyl chloride-based polymerization reaction while controlling an exothermic temperature inside the reactor.

More particularly, the present invention is intended to improve productivity and improve polymerization efficiency by designing a structure of a reflux condenser, among jacket, baffle, and reflux condenser devices which are in charge of heat removal of a reactor.

### Background Art

A vinyl chloride-based polymer is prepared by a batch reaction by suspension polymerization, and in order to improve productivity of the vinyl chloride-based polymer, a method of making a polymerization reactor larger or raising a polymerization temperature to shorten a polymerization time is mainly adopted.

However, either method is adopted, it is difficult to remove heat well, for example, when the polymerization reactor is made larger, non-uniformity of an internal concentration and temperature occurs, and when a polymerization temperature is raised to shorten the time, heat generated by heat of reaction may not be removed well to cause defects. In order to solve the above problems, a reflux condenser is used in the reactor to remove heat to attempt productivity improvement, but in this case also, the size of the reflux condenser should be increased due to the increase in the size of the reactor, and in the case of raising a reaction temperature, the device should be made larger, which thus has a limitation, and moreover, when the reflux condenser is used, a problem of scale formation inside the condenser or the reactor has to be serious.

In order to prevent scale formation described above, Japanese Patent Laid-Open Publication No. 1991-212409 (September 18, 1991) and the like disclose that scale formation is suppressed by spraying an antifoaming agent on an upper portion of the reactor for suppressing scale formation, but this corresponds to an addition of a foreign matter and has problems such as an influence on the physical properties of the prepared resin, and thus, the method also has a limitation in increasing productivity while having the same physical properties in the same reactor.
US 6 082 890 A describes a high axial flow glass coated impeller. EP 2 007 822 A1 describes a polymerization process. WO 2014 094793 A1 describes an apparatus and method for solvent extraction processing. WO 2018 038460 A1 describes a method for producing vinylidene chloride. WO 2019 003209 A1 describes a oligomerizer with improved mixing performance. KR 930002381 A describes a reactor system for suspension polymerization of vinyl chloride. JP 2007 260646 A describes a reactor and method for producing polymer by using the same. KR 2016 0000596 A and KR 2016 0004074 A describe a stirred tank reactor and method for preparing PVC resin using the same. KR 2016 0111664 A describes a polymerization reactor.

### Disclosure

### Technical Problem

An object of the present invention is to provide a reactor having a new type of agitator, the reactor which, when a vinyl chloride-based polymer is produced by conventional batch suspension polymerization and productivity is increased in the same reactor, for example, preferably, the productivity is increased by 30% or more, may increase heat removal ability of a maximum heating value increased by heat of reaction of the reactor while having the same size of a separate reflux condenser (RC) and minimize scale formation.

Specifically, the object of the present invention is to provide a batch reactor having improved productivity, improved heat removal ability, and no scale formation simply by partly changing a form of an agitator without changing a size of the reflux condenser and by specifying an agitator position.

Another object of the present invention is to provide a novel use of an agitator which may solve a non-uniformity problem of a concentration and a temperature inside a reactor which occurs due to inferiority of a heat removal capacity, by solving an inferiority problem of the heat removal capacity of the reflux condenser, when productivity is increased using the same reactor, differently from conventional technology, and a reaction system including the same.

Another object of the present invention is to provide a novel use of an agitator which prevents bubbles, that is, foam formed on an upper surface of a reactor liquid, so that scale is not formed and fish eye formation is significantly improved by the foaming, and a reaction system including the same.

Another object of the present invention is to provide a reactor having a novel agitator which may increase production by 30% or more in the same reactor.

Another object of the present invention is to provide a polymerization reactor adopting an agitator which may control heat of reaction even when the production is increased by 30% or more in the same reactor and may obtain homogeneous particles.

Another object of the present invention is to provide a method of preparing a vinyl chloride-based polymer by suspension polymerization, having a design of an agitator for polymerizing a vinyl chloride resin which solves problems that when productivity is increased by increasing a concentration of a monomer in the same reaction, due to a rapid increase of a heat removal amount of a reflux condenser, non-uniformity of a temperature and a concentration inside the reactor is increased to cause poor quality, increased fish eyes, or the like.

Still another object of the present invention is to provide a method of preparing a vinyl chloride-based polymer by suspension polymerization, having a design of a vinyl chloride resin (PVC) polymerization agitator, in which when productivity is increased by increasing the concentration of the monomer in the same reaction, a linear velocity of gaseous vinyl chloride monomer (VCM) is increased to solve problem such as formation of upper scale of the reflux condenser due to occurrence of foam on an upper portion of the reactor.

That is, the object of the present invention is to provide a suspension polymerizer having a reactor agitator which may increase production by for example, 30% or more in the same polymerizer.

### Technical Solution

The present invention is to provide the use of an agitator which may increase heat removal efficiency of a reflux condenser (RC) following a production increase in a commercial plant scale by reactor efficiency analysis according to a design of an agitator, and a polymerization reactor having the agitator.
To this end, the invention provides the batch suspension polymerization reactor for preparing a vinyl chloride resin according to claim 1, the batch suspension polymerization method for preparing a vinyl chloride resin according to claim 6 and the use of an agitator for batch suspension polymerization for preparing a vinyl chloride resin in a batch suspension polymerization reactor according to claim 10. Preferred embodiments of the invention are defined in the dependent claims.

Thus, the present invention relates to a novel polymerization reactor which is a pitched paddle type agitator having a plurality of stages, in which a tilt angle of an impeller forming each stage is adjusted and a ratio between a distance between a fluid interface inside the reactor and an upper portion of a top impeller and a diameter of the reactor is adjusted to increase production, and thus, even when a heat removal amount of the reaction is increased, a non-uniformity problem of a temperature and a concentration inside the reactor is solved, a particle size of a polymer to be prepared is made uniform, and scale formation inside the reactor or on an upper portion of a reflux condenser may be prevented.

In particular, the invention provides a batch suspension polymerization reactor for preparing a vinyl chloride resin which includes: a paddle type agitator having two or more stages of impellers, in which in the agitator, an angle (pitched angle) of blades of a top impeller is 5 to 20° with respect to an agitator shaft and an angle of blades of the other lower impellers except the top impeller is 0° with respect to the agitator shaft in a vertical direction, and the top impeller of the agitator is disposed in a lower portion of a liquid interface inside the reactor, so that the position of the top impeller satisfies a relationship between a distance (t) between an upper portion of blades of the top impeller and the liquid interface inside the reactor and a reactor diameter (D) which is t/D = 0.22 to 0.3.

That is, in an agitator having two or more stages of pitched paddle type impellers to an agitator shaft, when an angle of blades (usually having three blades) forming impellers in the other stages except a top impeller is 0°, the blades forming the top impeller is formed to be tilted at an angle of 5 to 20°.

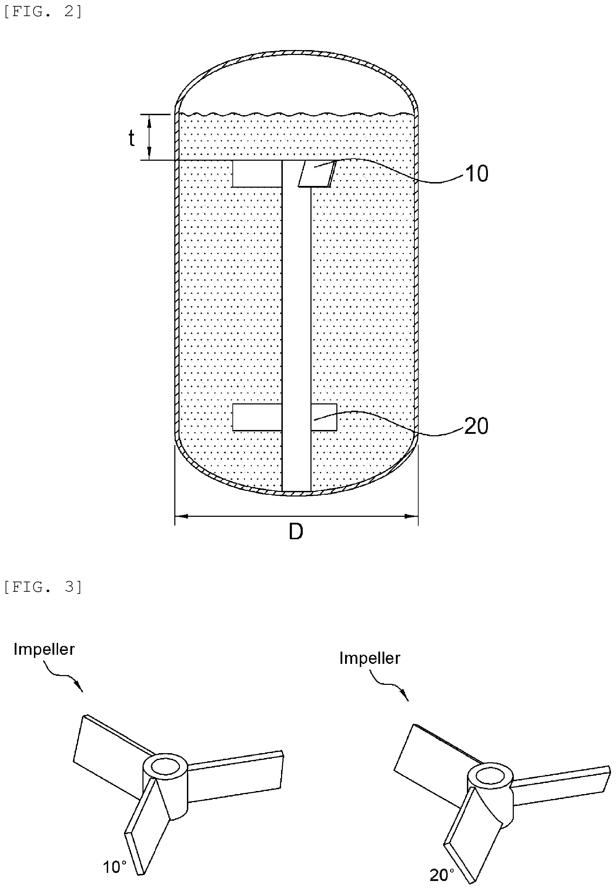

Here, the angle of blades refers to an angle inclined with respect to a vertical direction of the agitator as shown in FIG. 3.

In an exemplary embodiment of the present invention, the polymerization reactor may be provided with a reflux condenser.

As an example, "the angle of blades being 20°" refers to "the paddle type blade formed on the agitator shaft being inclined to 20° with respect to the vertical direction".

In an exemplary embodiment of the present invention, in the case of the present invention in which for example, three blades forming the top impeller are formed to be tilted at 5 to 20° with respect to the agitator shaft and the blades of impellers forming the other stages are formed in a vertical direction with respect to the agitator shaft, the polymerization reactor may have an efficiency of a relative heat removal ratio of twice or more that of the case in which the blades are formed vertically with respect to the agitator shaft.

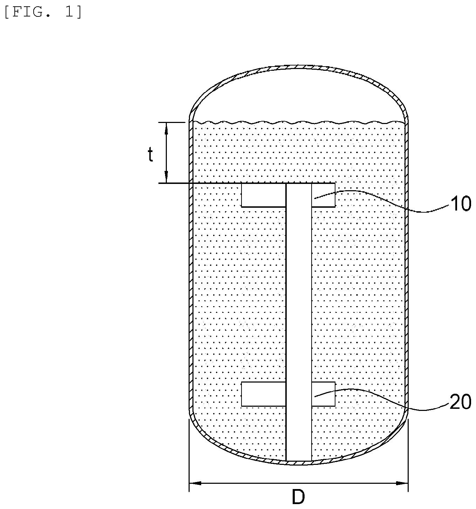

That is, as shown in FIG. 1, in the case of conventional batch suspension polymerization of a polyvinyl chloride resin, the angles of all blades of the paddle type agitator are the same vertically with respect to the agitator shaft; however, in contrast, as shown in FIG. 2, in the present invention, the angle of the blades of the top impeller is inclined at 5 to 20° with respect to the vertical direction of the agitator, while a distance (t) between an upper portion of the top impeller and a liquid interface inside the reactor relative to a reactor diameter (D) has a specific ratio, whereby the reflux condenser may have an efficiency of a relative heat removal ratio of twice or more, specifically twice to 10 times, and even in the case of increasing productivity by 30% or more, foam may be prevented from being formed on the upper portion of the reactor.

In an exemplary embodiment of the present invention, the angle of the top blades of the agitator may be 5 to 20°, and also may be 5 to 15°.

The invention also provides a batch suspension polymerization method for preparing a vinyl chloride resin which includes performing polymerization by adding a reaction monomer to a polymerization reactor having two or more stages of pitched paddle type agitator (hereinafter, expressed as a pitched paddle type agitator or a paddle type agitator), in which the agitator has blades of a top impeller which is tilted at 5 to 20° and a distance (t) between a top blade of the agitator and a liquid interface inside the reactor to a reactor diameter (D) is t/D = 0.22 to 0.3, and a batch suspension polymerizer for preparing a vinyl chloride resin.

In an exemplary embodiment of the present invention, the polymerization reactor may remove heat in a reflux condenser to perform circulation to the reactor.

In an exemplary embodiment of the present invention, an angle of blades of the top impeller of the agitator may be 15 to 20°.

In an exemplary embodiment of the present invention, an angle of blades of the top impeller of the agitator may be 5 to 15°.

The invention further provides the use of an agitator for batch suspension polymerization for preparing a vinyl chloride resin in a batch suspension polymerization reactor, which includes a jacket, a baffle, and a reflux condenser, in which the agitator is a paddle type agitator having two or more stages of paddle type impellers, and in the agitator, an angle (pitched angle) of blades of a top impeller is 5 to 20° and an angle of blades of the other lower impellers except the top impeller is 0° (that is, in a vertical direction with respect to a shaft) as further defined in claim 10.

In an exemplary embodiment of the present invention, an angle of blades of the top impeller of the agitator may be 15 to 20°.

In an exemplary embodiment of the present invention, an angle of blades of the top impeller of the agitator may be 5 to 15°.

In one embodiment, the agitator is a paddle type agitator having two stages of more of impellers, and in the agitator, blades of a top impeller is tilted at an angle (pitched angle) 5 to 20° with respect to an agitator shaft and an angle of blades of the other lower impellers except the top impeller are 0° with respect to the agitator shaft.

In one embodiment, the angle of blades of the top impeller of the agitator may be 15 to 20°.

In another embodiment, the angle of blades of the top impeller of the agitator may be 5 to 15°.

### Advantageous Effects

The present invention may provide the use of an agitator in which when productivity is increased using the same reactor, an inferiority problem of a heat removal capacity of a reflux condenser is solved, thereby solving a non-uniformity problem of a concentration and a temperature inside a reactor which occurs due to the inferiority of the heat removal capacity, and foam formed on an upper surface of a reactor liquid is prevented so that scale is not formed and fish eye formation by foaming is significantly improved, and a batch suspension polymerization reactor including the same.

In addition, the present invention provides a reaction system having a agitator which may increase productivity by 30% or more in the same reactor, and may provide a polymerization system adopting an agitator having a specific form to control heat or reaction and to obtain homogeneous particles and a specific value of a specification with the reactor therefrom.

The present invention is to provide a batch suspension polymerization reactor having a reactor agitator which may increase production by for example, 30% or more in the same polymerizer.

Therefore, the present invention relates to a paddle type agitator having a plurality of stages, and has been completed by changing a tilt angle of each stage and adjusting a ratio of a distance (t) between a liquid interface inside the reactor and an upper portion of the top impeller of the paddle type agitator immersed in a fluid to a reactor diameter (D).

Accordingly, the present invention provides a novel batch suspension polymerization reactor in which production is increased in spite of the use of the same reactor and the same reflux condenser, and thus, a heat removal quantity of the reactor is increased to solve a non-uniformity problem, a particle size of the polymer to be prepared is made uniform, and scale inside the reactor or on the upper portion of the reflux condenser may be prevented.

### Description of Drawings

FIG. 1 shows a conventional agitator of a reactor. (t/D=0.35, angles of blades of all impellers are all 0°.)
FIG. 2 shows an embodiment of an agitator used according to the present invention. (t/D=0.22, blades of a top impeller are tilted at an angle of 15° with respect to an agitator shaft direction, and an angle of blades of the other lower impellers is 0°.)
FIG. 3 shows an embodiment of a top paddle type impeller having different tilt angles.

### Best Mode

Hereinafter, the present invention will be described in more detail with reference to specific examples and exemplary embodiments including the accompanying drawings. However, the following specific examples or exemplary embodiments are only a reference for describing the present invention in detail, and the present invention is not limited thereto, and may be implemented in various forms.

In addition, unless otherwise defined, all technical terms and scientific terms have the same meanings as those commonly understood by a person skilled in the art to which the present invention pertains.

The terms used herein are only for effectively describing a certain specific example, and are not intended to limit the present invention.

In addition, the singular form used in the specification and claims appended thereto may be intended to also include a plural form, unless otherwise indicated in the context.

In addition, unless particularly described to the contrary, "comprising" any elements will be understood to imply further inclusion of other elements rather than the exclusion of any other elements.

As a result of conducting many studies for solving the above problems, the present invention found a pitched paddle type agitator having two or more stages of impellers, in which blades forming a top impeller is formed to be tilted at an angle (pitched angle) of 5 to 20°, blades of the other lower impellers are formed to be vertical with respect to an agitator shaft (0°), and the impellers are disposed so that a distance between an upper portion of blades of the top impeller and a liquid interface inside a reactor is 0.22 to 0.3 of a reactor diameter, thereby solving the problems.

That is, the above problems may be solved by providing a batch suspension polymerization reactor for preparing a vinyl chloride resin, in which the polymerization reactor has a paddle type agitator having two or more stages of impellers, in the agitator, usually three blades are formed to be tilted at an angle (pitched angle) of 5 to 20° with respect to the agitator shaft, and simultaneously, the upper portion of the blades of the top impeller of the agitator is disposed in a lower portion of the liquid interface in the reactor, but the disposed position satisfies a distance (t) between the upper portion of the blades of the top impeller and the liquid interface to the reactor diameter (D) (t/D) of 0.22 to 0.3.

In the present invention, the polymerization reactor may be a batch suspension polymerization reactor for preparing a vinyl chloride further including a reflux condenser.

The present invention may be a batch suspension polymerization reactor for preparing vinyl chloride, in which in the agitator, the angle of the blades of the top impeller is 15 to 20° and t/D of 0.22 to 0.30.

The polymerization reactor of the present invention may be a batch suspension polymerization reactor for preparing vinyl chloride, in which a relative heat removal ratio of the reflux condenser has an efficiency of twice or more the efficiency when the angle of the blades of the top impeller is 0°.

In the batch suspension polymerization method for preparing a vinyl chloride resin, the polymerization reactor may remove heat in the reflux condenser and circulate the heat to the reactor.

The present invention may be a batch suspension polymerization reactor for preparing a vinyl chloride resin which satisfies the conditions that the angle of the blades forming the top impeller of the agitator is 15 to 20°, the angle of the blades forming the other lower impellers is 0° in a vertical direction with respect to the agitating shaft, and t/D as defined above is 0.22 to 0.30, and a polymerization method using the same.

In addition, the present inventors used a batch reactor adopting the agitator having the specification described above, thereby improving productivity by 30% or more and minimizing a temperature deviation and a concentration deviation to prepare a polymer having uniform suspended particles.

In addition, the present inventors adopted a changed agitator, thereby improving a heat removal effect of the reflux condenser as compared with a conventional agitator and minimizing a fraction of an abnormal temperature and an abnormal concentration inside the polymerization reactor.

In the present invention, the reactor may include a batch reactor body having the agitator and containing reactants, a reflux condenser formed on an upper portion of the body, and a driving motor driving the agitator.

In addition, the batch reactor of the present invention is a component for controlling the temperature of the reactant and may include a reactor jacket, a baffle, and the like.

In addition, the present invention provides the use of an agitator for batch suspension polymerization for preparing a vinyl chloride resin, in which the agitator is a paddle type agitator having two stages of more of impellers, in the agitator, blades of a top impeller are tilted at an angle (pitched angle) of 5 to 20° with respect to an agitator shaft and an angle of blades of the other lower impellers except the top impeller is 0° with respect to the agitator shaft as further defined in claim 10.

In the agitator for batch suspension polymerization for preparing a vinyl chloride resin, an angle of blades of the top impeller of the agitator may be 15 to 20°.

In the agitator for batch suspension polymerization for preparing a vinyl chloride resin, an angle of blades of the top impeller of the agitator may be 5 to 15°.

Hereinafter, the present invention will be described in detail with reference to the drawings of the present invention.

FIG. 1 is an agitator of a conventional reactor, which is a paddle type agitator having a plurality of stages of impellers, in which an angle of all blades of the impeller of each stage is identically formed vertical with respect to an agitator shaft (the blades are formed at 0° with respect to the agitator shaft).

Specifically, blades 10 of a top impeller and blades 20 of the other lower impellers are formed at a uniform angle vertically in an axial direction.

In addition, a ratio of a distance (t) between the blade 10 of the top impeller and an interface of a reaction solution to a reactor diameter (D), that is, t/D is about 0.35, and when production is increased, uniform agitation is not performed, so that a heat removal effect of the reflux condenser of the reactor is not sufficient, and a temperature deviation and a concentration deviation of a polymerization solution occur, so that it is difficult to prepare a polymer having uniform particles.

In addition, on the interface of the polymerization solution, a large amount of bubbles was formed and when the bubbles were accompanied on the upper portion, scale was formed on a reactor wall surface, the reflux, and the like.

FIG. 2 illustrates an agitator used in an exemplary embodiment of the present invention. As shown in FIG. 2, in the paddle type agitator used according to an exemplary embodiment, an angle of blades 10 of a top impeller is inclined at 5 to 20° with respect to a vertical direction relative to an angle of the other lower blades 20.

More specifically, blades formed in impellers illustrated in FIG. 3 are formed to be inclined at 5 to 20° (the cases of being inclined at 10° and 20° are only illustrated).

As such, the angle of the blades of the top impeller is 5 to 20° and a ratio of a distance (t) between an upper portion 10 of the top impeller and the interface of the reaction solution to a reactor diameter (D), that is, t/D is adjusted to 0.22 to 0.30, so that the top impeller is disposed inside the reaction solution, thereby significantly decreasing a power/volume (P/V) value and also significantly decreasing an abnormal concentration volume ratio (%) and an abnormal temperature volume ratio (%). In addition, it was confirmed that when a monomer from which heat is removed in a reflux condenser enters the reactor, a temperature or concentration deviation is significantly decreased, and in spite of decreased P/V, the abnormal concentration volume ratio and the abnormal temperature volume ratio show an excellent effect as compared with the conventional agitator (comparative example).

That is, in the present invention, the angle of the blades forming the top impeller is tilted at 5 to 20° with respect to the agitator shaft, and simultaneously the top impeller is disposed inside the reaction solution, and the disposed position is specified so that a ratio of a distance (t) from the interface of the polymerization solution to the upper portion of the blades of the top impeller to the reactor diameter (D) is adjusted to 0.22 to 0.30, thereby improving heat removal efficiency by a reflux condenser, improving polymerization process productivity during preparation of a vinyl chloride-based polymer, preventing deposition of scale, and improving a fish eye of the obtained vinyl chloride-based polymer.

It was almost impossible to increase productivity preferably by 30% or more using the same reactor, but in the present invention, it was found that by changing the design of the agitator, the productivity may be improved by 30% or more in spite of use of the same reflux condenser and the same size of the polymerization reactor, whereby the present invention has been completed.

The following Table 1 shows a P/V ratio change, a volume ratio (%) having an abnormal concentration, a volume ratio (%) of the reaction solution having an abnormal temperature, and a heat removal efficiency of the reflux condenser, when the angle of the top blades according to the present invention was changed to 5 to 20°.

The following Table 1 shows a power ratio per unit volume, a concentration/temperature non-uniformity, and RC heat removal ratio, depending on the angle of the agitator blades, and measurement methods thereof are as follows:

### 1) Abnormal concentration volume ratio measurement method

The abnormal concentration volume ratio was measured using a software, FLUENT from ANSYS.

An average concentration of a fluid inside the reactor was measured, a concentration gradient of the fluid inside the reactor was predicted, a volume ratio at which the concentration gradient of about 2% or more relative to the average concentration measured above is shown was measured, and the volume ratio was divided by a total volume of the reactor to obtain the abnormal concentration volume ratio.

### 2) Abnormal temperature volume ratio measurement method

The abnormal temperature volume ratio was measured using a software, FLUENT from ANSYS.

An average temperature of a fluid inside the reactor was measured, a temperature gradient of the fluid inside the reactor was predicted for each section (for example, a gradient of 1°C or more, a gradient of 0.5°C or more, and a gradient of 0.2°C or more), a volume ratio at which a temperature gradient of about 0.5°C or more relative to the average temperature measured above is shown was measured, and the volume ratio was divided by a total volume of the reactor to obtain the abnormal temperature volume ratio.

### 3) Reflux condenser (RC) heat removal quantity measurement method

A heating ratio between a reflux condenser which is a constitutional element in charge of heat removal from a total heating quantity and a cooling baffle was calculated and obtained.

### 4) P/V ratio measurement method

P = 2 πτn (τ: torque, predictive value [Nm], n: rps,1/s), the unit of P is Nm/s = Watt
V = volume (m³) occupied by a reaction fluid

As the torque, a value applied to an impeller of each stage is measured, and was calculated by dividing the sum by a total volume of the fluid.

**Table 1**

| | Top blade angle (°) | P/V ratio | Abnormal concentrat ion volume ratio (%) | Abnormal temperatur e volume ratio (%) | RC heat removal ratio |
|---|---|---|---|---|---|
| Example 1 | 5 | 98 | 0.633 | 16.709 | 1 |
| Example 2 | 10 | 97 | 0.631 | 15.912 | 1 |
| Example 3 | 15 | 94 | 0.620 | 15.866 | 1 |
| Example 4 | 20 | 93 | 0.305 | 16.087 | 1 |
| Comparative Example 1 | 0 | 100 | 0.637 | 16.846 | 0.4 |
| Comparative Example 2 | 25 | 95 | 0.701 | 17.323 | 0.6 |

| | | | | | |
|---|---|---|---|---|---|
| (Abnormal concentration volume ratio: a volume ratio of a monomer having a concentration difference of 2% or more relative to the average monomer concentration inside the reactor, abnormal temperature volume ratio: a monomer volume ratio having a temperature difference of 0.5°C or more lower or higher than the reactor average temperature) | | | | | |

As seen in Table 1, when the angle of the top blades of the agitator was increased to 5 to 20°, the P/V ratio value was relatively decreased from 98 to 93, and an excellent characteristic of an agitation efficiency increased by 6 to 7% relative to 100 in the case in which the angle of the blade was 0° (standing vertically) as in Comparative Example 1 was shown. In addition, when a monomer condensed in the reflux condenser inside the reactor entered the reactor in a heated state, the abnormal concentration volume fraction and the abnormal temperature volume ratio were decreased at a certain point as compared with Comparative Example 1 and Comparative Example 2, and thus, when the agitator used in the present invention was used, a change rate of the abnormal concentration and the abnormal temperature inside the reactor was significantly decreased, and an excellent characteristic was shown also in agitation force. In addition, in the heat removal effect, the heat removal effect of the present invention has efficiency of twice or more Comparative Example 1, and thus, it was found that a significant heat removal effect may be prevented.

In the present invention, considering the P/V ratio and the abnormal concentration volume ratio, an angle of 15 to 20° may be more preferred, and though not separately described, considering foam occurrence in the interface, an angle of 5 to 15°, more preferably 5 to 10° may be preferred.

In addition, in FIG. 3, a paddle type agitator in which the angle of the blades in a top stage is changed by 5 to 20° is shown as an example.

A P/V ratio at which a distance (t) between the interface and the upper blade position of the top impeller and the reactor diameter (D) when the angle of the blade of the present invention was 10° was 0.22 to 0.3, the abnormal concentration volume ratio, and the abnormal temperature volume ratio were calculated and are listed in the following Table 2.

The following Table 2 shows a power ratio per unit volume and concentration/temperature non-uniformity depending t/D, and a RC heat removal ratio.

**Table 2**

| | t/D | P/V ratio | Abnormal concentrati on volume ratio (%) | Abnormal temperature volume ratio (%) | RC heat removal ratio |
|---|---|---|---|---|---|
| Example 5 | 0.26 | 93 | 0.567 | 15.580 | 1 |
| Example 6 | 0.30 | 99 | 0.686 | 16.093 | 1 |
| Example 7 | 0.22 | 93 | 0.548 | 15.199 | 1 |
| Comparative Example 3 | 0.34 | 104 | 0.703 | 17.446 | 0.4 |

As shown in Table 2, when polymerization was performed with the t/D value of the present invention changed to 0.22 to 0.3, an agitation force was shown better in the P/V ratio, and occurrence of the abnormal concentration and the abnormal temperature was also significantly decreased as compared with Comparative Example 3. The polymerization reactor used in the present invention was a polymerization reactor in which a reflux condenser was built, and the reaction tank was a batch reactor having a convent volume of 10 m³ or more, in particular 100 m³ or more. In addition, in the present invention, the polymerization reactor may be provided with a baffle, and also provided with a jacket for heating and cooling, and as the jacket for heating and cooling, for example, an outer jacket, an inner jacket, and the like may be used.

## Claims

1. A batch suspension polymerization reactor for preparing a vinyl chloride resin, the reactor comprising: a paddle type agitator having two or more stages of impellers, wherein in the agitator, an angle (pitched angle) of blades of a top impeller is 5 to 20° with respect to an agitator shaft and an angle of blades of the other lower impellers except the top impeller is 0° with respect to the agitator shaft in a vertical direction, and the top impeller of the agitator is disposed in a lower portion of a liquid interface inside the reactor, so that a position of the top impeller satisfies a relationship between a distance (t) between an upper portion of blades of the top impeller and the liquid interface inside the reactor and a reactor diameter (D) which is t/D = 0.22 to 0.3.

2. The batch suspension polymerization reactor for preparing vinyl chloride resin of claim 1, further comprising a reflux condenser.

3. The batch suspension polymerization reactor for preparing vinyl chloride resin of claim 1, wherein the angle of the blades of the top impeller of the agitator is 15 to 20°.

4. The batch suspension polymerization reactor for preparing vinyl chloride resin of claim 1, wherein the polymerization reactor has a relative heat removal ratio of the reflux condenser having an efficiency of twice or more the efficiency when the angle of the blades of the top impeller is 0°.

5. The batch suspension polymerization reactor for preparing vinyl chloride resin of claim 1, wherein the angle of blades of the top impeller of the agitator is 5 to 15°.

6. A batch suspension polymerization method for preparing a vinyl chloride resin, the method comprising performing a reaction by adding a monomer, wherein a batch suspension polymerization reactor for preparing a vinyl chloride resin includes a paddle type agitator having two or more stages of impellers, in the agitator, an angle (pitched angle) of blades of a top impeller is 5 to 20° with respect to an agitator shaft and an angle of blades of the other lower impellers except the top impeller is 0° with respect to the agitator shaft in a vertical direction, and the top impeller of the agitator is disposed in a lower portion of a liquid interface inside the reactor and a position of the top impeller satisfies a relationship between a distance (t) between an upper portion of blades of the top impeller and the liquid interface inside the reactor and a reactor diameter (D) which is t/D = 0.22 to 0.3.

7. The batch suspension polymerization method for preparing a vinyl chloride resin of claim 6, wherein in the polymerization reactor, heat is removed in the reflux condenser and is circulated to the reactor.

8. The batch suspension polymerization method for preparing a vinyl chloride resin of claim 6, wherein the angle of the blades of the top impeller of the agitator is 15 to 20°.

9. The batch suspension polymerization method for preparing a vinyl chloride resin of claim 6, wherein the angle of the blades of the top impeller of the agitator is 5 to 15°.

10. Use of an agitator for batch suspension polymerization for preparing a vinyl chloride resin in a batch suspension polymerization reactor, the agitator comprising: a jacket, a baffle, and a reflux condenser, wherein the agitator is a paddle type agitator having two stages of more of impellers, and in the agitator, an angle (pitched angle) of blades of a top impeller is tilted at 5 to 20° with respect to an agitator shaft and an angle of blades of the other lower impellers except the top impeller is 0° with respect to the agitator shaft, and wherein the top impeller of the agitator is disposed in a lower portion of a liquid interface inside the reactor, so that a position of the top impeller satisfies a relationship between a distance (t) between an upper portion of blades of the top impeller and the liquid interface inside the reactor and a reactor diameter (D) which is t/D = 0.22 to 0.3.

11. The use of claim 10, wherein the angle of the blades of the top impeller of the agitator is 15 to 20°.

12. The use of claim 10, wherein the angle of the blades of the top impeller of the agitator is 5 to 15°.

## Patentansprüche

1. Batch-Suspensionspolymerisationsreaktor zur Herstellung eines Vinylchloridharzes, wobei der Reaktor umfasst: ein Rührwerk vom Schaufeltyp mit zwei oder mehr Stufen von Rührern, wobei in dem Rührwerk ein Winkel (Steigungswinkel) der Schaufeln eines oberen Rührers 5 bis 20° in Bezug auf eine Rührwerkswelle beträgt und ein Winkel der Schaufeln der anderen unteren Rührer mit Ausnahme des oberen Rührers 0° in Bezug auf die Rührwerkswelle in einer vertikalen Richtung beträgt, und der obere Rührer des Rührwerks in einem unteren Abschnitt einer Flüssigkeitsgrenzfläche innerhalb des Reaktors angeordnet ist, so dass eine Position des oberen Rührers eine Beziehung zwischen einem Abstand (t) zwischen einem oberen Abschnitt von Schaufeln des oberen Rührers und der Flüssigkeitsgrenzfläche innerhalb des Reaktors und einem Reaktordurchmesser (D) erfüllt, die t/D = 0,22 bis 0,3 ist.

2. Batch-Suspensionspolymerisationsreaktor zur Herstellung von Vinylchloridharz nach Anspruch 1, der außerdem einen Rückflusskondensator umfasst.

3. Batch-Suspensionspolymerisationsreaktor zur Herstellung von Vinylchloridharz nach Anspruch 1, wobei der Winkel der Schaufeln des oberen Rührers des Rührwerks 15 bis 20° beträgt.

4. Batch-Suspensionspolymerisationsreaktor zur Herstellung von Vinylchloridharz nach Anspruch 1, wobei der Polymerisationsreaktor ein relatives Wärmeabführungsverhältnis des Rückflusskondensators aufweist, das einen Wirkungsgrad hat, der doppelt so hoch oder höher ist als der Wirkungsgrad, wenn der Winkel der Schaufeln des oberen Rührers 0° beträgt.

5. Batch-Suspensionspolymerisationsreaktor zur Herstellung von Vinylchloridharz nach Anspruch 1, wobei der Winkel der Schaufeln des oberen Rührers des Rührwerks 5 bis 15° beträgt.

6. Batch-Suspensionspolymerisationsverfahren zur Herstellung eines Vinylchloridharzes, wobei das Verfahren die Durchführung einer Reaktion durch Zugabe eines Monomers umfasst, wobei ein Batch-Suspensionspolymerisationsreaktor zur Herstellung eines Vinylchloridharzes umfasst: ein Rührwerk vom Schaufeltyp mit zwei oder mehr Stufen von Rührern, wobei in dem Rührwerk ein Winkel (Steigungswinkel) der Schaufeln eines oberen Rührers 5 bis 20° in Bezug auf eine Rührwerkswelle beträgt und ein Winkel der Schaufeln der anderen unteren Rührer mit Ausnahme des oberen Rührers 0° in Bezug auf die Rührwerkswelle in einer vertikalen Richtung beträgt, und der obere Rührer des Rührwerks in einem unteren Abschnitt einer Flüssigkeitsgrenzfläche im Inneren des Reaktors angeordnet ist und eine Position des oberen Rührers eine Beziehung zwischen einem Abstand (t) zwischen einem oberen Abschnitt von Schaufeln des oberen Rührers und der Flüssigkeitsgrenzfläche im Inneren des Reaktors und einem Reaktordurchmesser (D) erfüllt, die t/D = 0,22 bis 0,3 ist.

7. Batch-Suspensionspolymerisationsverfahren zur Herstellung eines Vinylchloridharzes nach Anspruch 6, wobei im Polymerisationsreaktor Wärme im Rückflusskondensator abgeführt und in den Reaktor zurückgeleitet wird.

8. Batch-Suspensionspolymerisationsverfahren zur Herstellung eines Vinylchloridharzes nach Anspruch 6, wobei der Winkel der Schaufeln des oberen Rührers des Rührwerks 15 bis 20° beträgt.

9. Batch-Suspensionspolymerisationsverfahren zur Herstellung eines Vinylchloridharzes nach Anspruch 6, wobei der Winkel der Schaufeln des oberen Rührers des Rührwerks 5 bis 15° beträgt.

10. Verwendung eines Rührwerks für die Batch-Suspensionspolymerisation zur Herstellung eines Vinylchloridharzes in einem Batch-Suspensionspolymerisationsreaktor, wobei das Rührwerk umfasst: einen Mantel, eine Prallplatte und einen Rückflusskondensator, wobei das Rührwerk ein Rührwerk vom Schaufeltyp mit zwei oder mehr Stufen von Rührern ist, und in dem Rührwerk ein Winkel (Neigungswinkel) der Schaufeln eines oberen Rührers um 5 bis 20° in Bezug auf eine Rührwerkswelle geneigt ist und ein Winkel der Schaufeln der anderen unteren Rührer mit Ausnahme des oberen Rührers 0° in Bezug auf die Rührwerkswelle beträgt, und wobei der obere Rührer des Rührwerks in einem unteren Abschnitt einer Flüssigkeitsgrenzfläche innerhalb des Reaktors angeordnet ist, so dass eine Position des oberen Rührers eine Beziehung zwischen einem Abstand (t) zwischen einem oberen Abschnitt von Schaufeln des oberen Rührers und der Flüssigkeitsgrenzfläche innerhalb des Reaktors und einem Reaktordurchmesser (D) erfüllt, der t/D = 0,22 bis 0,3 ist.

11. Verwendung nach Anspruch 10, wobei der Winkel der Schaufeln des oberen Rührers des Rührwerks 15 bis 20° beträgt.

12. Verwendung nach Anspruch 10, wobei der Winkel der Schaufeln des oberen Rührers des Rührwerks 5 bis 15° beträgt.

## Revendications

1. Réacteur de polymérisation en suspension discontinue pour la préparation d'une résine de chlorure de vinyle, le réacteur comprenant : un agitateur de type à palettes comportant deux étages ou plus de roues, où, dans l'agitateur, un angle (angle d'inclinaison) des pales d'une roue supérieure est de 5 à 20° par rapport à l'arbre de l'agitateur et un angle des pales des autres roues inférieures, à l'exception de la roue supérieure, est de 0° par rapport à l'arbre de l'agitateur, dans une direction verticale, et la roue supérieure de l'agitateur est disposée dans une partie inférieure d'une interface liquide à l'intérieur du réacteur, de sorte qu'une position de la roue supérieure satisfait à une relation entre une distance (t) entre une partie supérieure des pales de la roue supérieure et l'interface liquide à l'intérieur du réacteur et un diamètre du réacteur (D) qui est t/D = 0,22 à 0,3.

2. Réacteur de polymérisation en suspension discontinue pour la préparation d'une résine de chlorure de vinyle de la revendication 1, comprenant en outre un condenseur à reflux.

3. Réacteur de polymérisation en suspension discontinue pour la préparation d'une résine de chlorure de vinyle selon la revendication 1, dans lequel l'angle des pales de la roue supérieure de l'agitateur est de 15 à 20°.

4. Réacteur de polymérisation en suspension discontinue pour la préparation d'une résine de chlorure de vinyle selon la revendication 1, dans lequel le réacteur de polymérisation a un rapport d'élimination de chaleur relative du condenseur à reflux ayant une efficacité de deux fois ou plus l'efficacité lorsque l'angle des pales de la roue supérieur est de 0°.

5. Réacteur de polymérisation en suspension discontinue pour la préparation d'une résine de chlorure de vinyle selon la revendication 1, dans lequel l'angle des pales de la roue supérieure de l'agitateur est de 5 à 15°.

6. Procédé de polymérisation en suspension discontinue pour préparer une résine de chlorure de vinyle, le procédé comprenant l'exécution d'une réaction par l'ajout d'un monomère, dans laquelle un réacteur de polymérisation en suspension discontinue pour la préparation d'une résine de chlorure de vinyle comprend un agitateur de type à palettes ayant deux étages ou plus de roues, dans l'agitateur, un angle (angle d'inclinaison) des pales d'une roue supérieure est de 5 à 20° par rapport à un arbre d'agitateur et un angle des pales des autres roues inférieures à l'exception de la roue supérieure est de 0° par rapport à l'arbre de l'agitateur dans une direction verticale, et la roue supérieure de l'agitateur est disposée dans une partie inférieure d'une interface liquide à l'intérieur du réacteur et une position de la roue supérieure satisfait une relation entre une distance (t) entre une partie supérieure des pales de la roue supérieure et l'interface liquide à l'intérieur du réacteur et un diamètre du réacteur (D) qui est t/D = 0,22 à 0,3.

7. Procédé de polymérisation en suspension discontinue pour la préparation d'une résine de chlorure de vinyle selon la revendication 6, dans lequel, dans le réacteur de polymérisation, la chaleur est éliminée dans le condenseur à reflux et circule dans le réacteur.

8. Procédé de polymérisation en suspension discontinue pour la préparation d'une résine de chlorure de vinyle selon la revendication 6, dans lequel l'angle des pales de la roue supérieure de l'agitateur est de 15 à 20°.

9. Procédé de polymérisation en suspension discontinue pour la préparation d'une résine de chlorure de vinyle selon la revendication 6, dans lequel l'angle de des pales de la roue supérieure de l'agitateur est de 5 à 15°.

10. Utilisation d'un agitateur pour la polymérisation en suspension discontinue pour préparer une résine de chlorure de vinyle dans un réacteur de polymérisation en suspension discontinue, l'agitateur comprenant : une enveloppe, un déflecteur et un condenseur à reflux, dans lequel l'agitateur est un agitateur de type à palettes ayant deux étages ou plus de roues, et dans l'agitateur, un angle (angle d'inclinaison) des pales d'une roue supérieure est incliné de 5 à 20° par rapport à un arbre d'agitateur et un angle des pales des autres roues inférieures à l'exception de la roue supérieure est de 0° par rapport à l'arbre de l'agitateur, et dans lequel la roue supérieure de l'agitateur est disposée dans une partie inférieure d'une interface liquide à l'intérieur du réacteur, de sorte qu'une position de la roue supérieure satisfait une relation entre une distance (t) entre une partie supérieure des pales de la roue supérieure et l'interface liquide à l'intérieur du réacteur et un diamètre du réacteur (D) qui est t/D = 0,22 à 0,3.

11. Utilisation selon la revendication 10, dans laquelle l'angle des pales de la roue supérieure de l'agitateur est de 15 à 20°.

12. Utilisation selon la revendication 10, dans laquelle l'angle des pales de la roue supérieure de l'agitateur est de 5 à 15°.
